(19) Europäisches Patentamt
European Patent Office
Office européen des brevets

(11) **EP 3 579 069 A1**

(12) **EUROPÄISCHE PATENTANMELDUNG**

(43) Veröffentlichungstag:
**11.12.2019 Patentblatt 2019/50**

(51) Int Cl.:
**G05B 19/418** (2006.01)  **G01N 11/00** (2006.01)

(21) Anmeldenummer: **18176226.1**

(22) Anmeldetag: **06.06.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **VERFAHREN UND SYSTEM ZUR STEUERUNG UND/ODER REGELUNG EINER ZUR HERSTELLUNG VON THERMOPLASTISCHEM KUNSTSTOFF EINGERICHTETEN PRODUKTIONSANLAGE**

(57)  Die Erfindung betrifft ein Verfahren zur Steuerung und/oder Regelung einer zur Herstellung von thermoplastischem Kunststoff eingerichteten Produktionsanlage. Darüber hinaus betrifft die Erfindung eine Vorrichtung und ein System zu dessen Ausführung. Zum Verringern von Schwankungen in der Produktqualität schlägt die vorliegende Erfindung folgende Verfahrensschritte vor: Erfassen eines Druckwerts in der Produktionsanlage; Bestimmen eines geschätzten Werts, der für eine Viskosität indikativ ist, zumindest teilweise basierend auf dem erfassten Druckwert und zumindest teilweise basierend auf einer Temperaturabhängigkeit eines viskosen Verhaltens des thermoplastischen Kunststoffes und zumindest teilweise eines Volumenstroms; und Bestimmen eines für das viskose Verhalten des thermoplastischen Kunststoffes indikativen Viskositätswerts zumindest teilweise in Abhängigkeit eines Korrekturfaktors, wobei der Korrekturfaktor für einen Anlagenzustand indikativ ist, und wobei der Anlagenzustand zumindest teilweise durch mindestens einen herrschenden Produktionsparameter bestimmt ist.

Fig. 1

I — Erfassen eines Druckwerts $D_{mess}$

L — Ermitteln einer realen Viskosität $V_{labor}$ durch punktuellen Probenentnahme

II — Bestimmen eines Korrekurfaktors f(T) und eines Volumenstroms S

III — Bestimmen eines geschätzten Viskositätswerts $V_g(T)$

IV — Bestimmen historischer Werte aus einem Vergleich zwischen $V_g(T)$ und $V_{labor}$

V — Bestimmen eines Korrekturfaktors KF und eines Viskositätswerts $V_{KF}(T)$ in Abhängigkeit von f(T) und $D_{mess}$ und Volumenstroms S

VI — Vergleich zwischen $V_{KF}(T)$ und $V_{soll}$ ← Sollviskositätswert $V_{soll}$

VII — Bestimmen einer Regelungsinformation RI in Abhängigkeit des Ergebnisses des Vergleichs

VIII — Beeinflussen beispielsweise des Drucks in der Vorrichtung in Abhängigkeit von RI

EP 3 579 069 A1

**Beschreibung**

**Gebiet der Erfindung**

Die Erfindung betrifft ein Verfahren zur Steuerung und/oder Regelung einer zur Herstellung von thermoplastischem Kunststoff eingerichteten Produktionsanlage. Darüber hinaus betrifft die Erfindung eine Vorrichtung und ein System zu dessen Ausführung.

**Hintergrund der Erfindung**

Ein großtechnisch eingesetztes Verfahren zur Herstellung von Polycarbonat ist das Schmelzepolycarbonat (SPC) Verfahren. Polycarbonat, das nach dem sogenannten Schmelzumesterungsverfahren, auch Schmelzeverfahren genannt, aus organischen Carbonaten, wie z.B. Diarylcarbonaten, und Bisphenolen ohne Verwendung zusätzlicher Lösungsmittel in der Schmelze hergestellt wird, gewinnt zunehmend an wirtschaftlicher Bedeutung und ist daher für viele Einsatzgebiete ein geeignetes Material. Die Herstellung aromatischer Polycarbonate nach dem Schmelzumesterungsverfahren ist bekannt und beispielsweise beschrieben in "Schnell", Chemistry and Physics of Polycarbonats, Polymer Reviews, Vol. 9, Interscience Publishers, New York, London, Sydney 1964, in D.C. Prevorsek, B.T. Debona and Y. Kersten, Corporate Research Center, Allied Chemical Corporation, Moristown, New Jersey 07960, "Synthesis of Poly(ester)carbonate Copolymers" in Journal of BMS 09 1 257-Ausland Polymer Science, Polymer Chemistry Edition, Vol. 19, 75-90 (1980), in D. Freitag, U. Grigo, P.R. Müller, N. Nouvertne, BAYER AG, "Polycarbonates" in Encyclopedia of Polymere Science and Engineering, Vol. 11, Second Edition, 1988, Seiten 648-718 und schließlich in Des. U. Grigo, K. Kircher und P.R. Müller "Polycarbonate" in Becker/Braun, Kunststoff-Handbuch, Band 3/1,Polycarbonate, Polyacetale, Polyester, Celluloseester, Carl Hanser Verlag München, Wien 1992, Seiten 117-299.

Zum Abschluss des Herstellungsverfahrens wird der hergestellte thermoplastische Kunststoff üblicher Weise pelletiert, um dessen Verwendung als Rohmaterial im Rahmen späterer Verarbeitungsverfahren zu vereinfachen.

Polycarbonate lassen sich mit allen für Thermoplaste üblichen Verfahren verarbeiten. Dabei ist die Viskosität des zu verarbeitenden Stoffes von großer Bedeutung, wie zum Beispiel beim Spritzgießen. Um ein Produkt mit Eigenschaften, die für ein solches Nachbearbeitungsverfahren geeignet sind, herzustellen und die geforderte Produktqualität zu erhalten, wird bei der Herstellung von Polycarbonat ein Sollwert für die Viskosität vorgegeben.

Bei der Herstellung von thermoplastischen Kunststoffen wie Polycarbonat kann die reale Viskosität, also die tatsächliche Viskosität des hergestellten Kunststoffes, einerseits mittels eines beherrschten Prozesses, andererseits mittels eines nicht beherrschten Prozesses beeinflusst werden. Zum Beispiel können die Rohmaterialien, die zur Herstellung verwendet werden, mit Bedacht hinsichtlich ihrer Wirkung auf die Viskosität des Kunststoffes ausgewählt werden, was einen beherrschten Prozess darstellt, die Viskosität zu beeinflussen. Weiterhin kann eine Vielfalt von Faktoren, die nicht beherrscht sind, dazu führen, dass sich die reale Viskosität im Laufe der Zeit ändert. Solche Faktoren können mit der Produktionsanlage verbundenen Parameter sein, wie zum Beispiel Verschleiß, oder Faktoren, die schwierig zu steuern sind, wie zum Beispiel die sich mit Jahreszeiten ändernde Umgebungstemperatur am Produktionsort. Insbesondere kann sich die tatsächliche Viskosität des hergestellten Kunststoffes im Betrieb der Anlage z.B. durch Schwankungen in der Qualität der Ausgangsmaterialien ändern (Anteil an Verunreinigungen etc.), durch Schwankungen des Verhältnisses zwischen zwei Ausgangsstoffen, beispielsweise DPC und BPA, und/oder durch Schwankungen in der Druckregelung einzelner Reaktoren, die zur Produktion beitragen. Darüber hinaus können auch Produktwechsel sowie Durchfluss und Lastwechsel im Prozess zu Änderungen der tatsächlichen Viskosität des hergestellten Kunststoffes beitragen.

Aus diesem Grund wird die reale Viskosität des hergestellten Kunststoffes überwacht und die Steuerung der Produktionsanlage entsprechend angepasst.

Um eine solche Überwachung bzw. Steuerung der Produktionsanlage durchzuführen werden bei Herstellungsverfahren bekannter Art Proben aus der Produktionsanlage während des Herstellens und in bestimmten diskreten Zeitabständen, beispielsweise mit einer Abtastrate von 1h bis 4h, entnommen. Anschließend erfolgen eine Analyse und eine Auswertung der entnommenen Proben. Die Auswertung liefert standardmäßig eine oder mehrere der folgenden Informationen über die Probe: MVR (melt viscosity rate), MFI (melt viscosity index), V-Zahl (Viskositätszahl), Lösungsviskosität, Verzweigergrad oder Farbe (YI) und zumeist das Molekulargewicht. Diese Informationen sind für ein viskoses Verhalten der Probe indikativ. Eine durch Auswertung einer Probe erhaltene Größe wird im Folgenden als Messwert bezeichnet.

Die Analyse und die Auswertung kann beispielsweise mittels einer im Handbuch Thomas Mezger: Das Rheologie-Handbuch, 3. Print 2000, Vincentz Network GmbH & C, (pp.332) beschriebenen Messmethode erfolgen, um ein Bestimmen der Viskosität durchführen zu können. Die V-Zahl hängt zum Beispiel mit der relativen Viskosität zusammen, die für eine Polymerkonzentration von 0,5% in Methylenchlorid gemessen wird. Der Wert für MVR kann seinerseits für hochviskoses Material bei 300°C mit einem Gewicht von 1,2 kg in einer standardisierten Apparatur gemessen werden, beispielsweise gemäß der Norm DIN EN ISO 1133-1. Des Weiteren besteht bekannter weise der folgende Zusammenhang zwischen V-Zahl und dem Wert für MVR: MVR = a*(V-Zahl)$^b$, wobei a und b relative reale Konstanten sind.

Anschließend werden zur Auswertung eines Messwerts der eingangs genannten Art in bekannter Weise die Messwerte mit dem Sollwert für die Viskosität, der im Rahmen einer Produktqualität vordefiniert wurde, verglichen. Anhand der sukzessiven Probenentnahmen, deren Auswertungen und des Vergleichs kann bewertet werden, in wie fern die Steuerung der Produktionsanlage anzupassen ist, um die Viskosität dem Sollwert an zu nähern.

Die meisten Herstellungsprozesse für thermoplastische Kunststoffe wie Polycarbonat laufen kontinuierlich ab. Mit anderen Worten werden die Produktionsanlagen meistens ununterbrochen betrieben, um insbesondere die Herstellung wirtschaftlich durchzuführen. Da die oben beschriebene Probenentnahme und die Auswertung der Eigenschaften des hergestellten Kunststoffes punktuell mit einem zeitlichen Abstand, der einer Totzeit entspricht, durchgeführt werden, wird die Steuerung der Anlage entsprechend punktuell angepasst. Durch die Diskrepanz zwischen dem kontinuierlichem Charakter der Herstellung und dem diskreten Charakter der Messungen bzw. der Anpassung der Steuerung entstehen im Laufe der Zeit Unregelmäßigen in der realen Viskosität der hergestellten Kunststoffes. Darunter leidet schließlich die Produktqualität und es kann eine größere Menge Ausschussware erzeugt werden.

Weiterhin stellt sich bei der Auswertung der entnommenen Proben die Berücksichtigung von mit der Produktionsanlage verbundenen Faktoren, die die Viskosität des hergestellten Kunststoffes beeinflussen können, als schwierig dar. Generell werden bei der Auswertung nur bekannte Faktoren wie zum Beispiel eine Temperaturabhängigkeit der Viskosität berücksichtigt. Daraus ergibt sich eine Diskrepanz zwischen der realen Viskosität und den Messwerten, die die Auswertung liefert.

Um eine Steuerung der Produktionsanlage zu erreichen, kann die Viskosität auf einfache Weise z.B. durch Veränderung des Drucks (bzw. des Vakuums) in den Viskosreaktoren beeinflusst werden. Darüber hinaus können die Reaktortemperatur, die Verweilzeit und/oder das Eduktverhältnis verändert werden.

## Zusammenfassung einiger beispielhafter Ausführungsformen

Ausgehend von diesem Stand der Technik besteht die Aufgabe der Erfindung darin, ein Verfahren zur Steuerung und/oder Regelung einer zur Herstellung von thermoplastischem Kunststoff eingerichteten Produktionsanlage bereitzustellen, das die vorstehend angeführten Probleme vermeidet bzw. verringert und das insbesondere ermöglicht, Schwankungen in der Produktqualität zu minimieren.

Zur technischen Lösung dieser Aufgabe wird mit der Erfindung ein Verfahren zur Steuerung und/oder Regelung einer zur Herstellung von thermoplastischem Kunststoff eingerichteten Produktionsanlage vorgeschlagen, umfassend:

- Erfassen eines Druckwerts in der Produktionsanlage;

- Bestimmen eines geschätzten Werts, der für eine Viskosität indikativ ist, zumindest teilweise basierend auf dem erfassten Druckwert und zumindest teilweise basierend auf einer Temperaturabhängigkeit eines viskosen Verhaltens des thermoplastischen Kunststoffes sowie eines Volumenstroms; und

- Bestimmen eines für das viskose Verhalten des thermoplastischen Kunststoffes indikativen Viskositätswerts zumindest teilweise in Abhängigkeit eines Korrekturfaktors, wobei der Korrekturfaktor für einen Anlagenzustand indikativ ist, und wobei der Anlagenzustand zumindest teilweise durch mindestens einen herrschenden Produktionsparameter bestimmt ist.

Der Zustand der Produktionsanlage kann sich beispielsweise durch wechselnde Produkttypen mit unterschiedlichen Sollwerten der Viskosität und einer dem Wechsel inhärenten Übergangsphase ändern. Zudem können sich Sensoren im Laufe der Zeit verändern und ein Offset aufweisen, welches sich dann in der Vorhersage der Viskosität fortsetzen würde. Die Volumenstrommessung kann gleichfalls Abweichungen aufweisen. Fouling und/oder Verblockungen können im statischen Mischer aber auch in anderen Anlagenteilen auftreten und dadurch den Zustand der Produktionsanlage (z.B. Veränderung im Druckverlust, Veränderung im Wärmeübergang) verändern.

Die erfindungsgemäße Korrektur erlaubt eine rasche Reaktion auf die Veränderung des Anlagenzustandes, sodass Schwankungen in der Produktqualität minimiert werden.

Der Erfindung liegt zum einen die Erkenntnis zugrunde, dass durch das Bestimmen eines geschätzten Werts, der für eine Viskosität indikativ ist, zumindest teilweise basierend auf dem erfassten Druckwert in der Produktionsanlage, eine zeitnah bzw. ununterbrochene Erfassung der Viskosität des hergestellten Kunststoffes durchgeführt werden kann. Mit anderen Worten kann die Viskosität des hergestellten Kunststoffes ohne Totzeit, also auf eine kontinuierliche Art, bestimmt werden. Folglich kann die Steuerung der Produktionsanlage durchgängig entsprechend eines festgesetzten Sollwerts für die Viskosität angepasst werden. Somit wird die reale Viskosität des hergestellten Kunststoffes durchgängig nah am Sollwert gehalten, so dass die allgemeine Produktqualität verbessert wird.

Dies bietet zudem die Möglichkeit, unerwartete Störungen, die im Laufe des Herstellungsprozesses vorkommen können, und die die Viskosität des hergestellten Kunststoffes beeinflussen, zu erfassen und eine entsprechende Anpassung der Steuerung der Produktionsanlage zu unternehmen. Dadurch entsteht weniger Ausschussware, so dass im Allgemeinen eine verbesserte Produktqualität erreicht wird.

Zum anderen liegt der Erfindung die Erkenntnis zugrunde, dass die Berücksichtigung des Korrekturfaktors KF verbesserte Möglichkeiten für Produktwechselvorgänge bietet. Verschiedene Produkte, die im Rahmen eines Produktwechselvorgangs nacheinander in einer selben Produktionsanlage hergestellt werden, können verschiedene Eigenschaften aufweisen. Diese Unterschiede, insbesondere Unterschiede im viskosen Verhalten der verschiedenen Produkte, können in dem Korrekturfaktor berücksichtigt werden. Somit kann durch eine Änderung des Korrekturfaktors eine Änderung des hergestellten Kunststoffes berücksichtigt werden und ein Bestimmen der Viskosität, das an den aktuell hergestellten Kunststoff angepasst ist, ohne weiteren Aufwand fortgeführt werden.

Veränderungen des Zustandes der Produktionsanlage, wie beispielsweise veränderte Bedingungen in der Produktionsanlage durch Fouling oder Abweichungen der Sensoren (offset) oder des Volumenstroms sowie Produktwechselvorgänge, können durch den Korrekturfaktor abgebildet werden, sodass eine Anpassung des Anlagenzustands rasch erfolgen kann und die Produkte mit gewünschter Spezifikationen und mit minimierten negativen Einflüsse auf die Qualität der Produkte produziert werden können.

Im Rahmen der vorliegenden Erfindung werden unter dem Begriff Produktionsanlage insbesondere Anlagen verstanden, die eine Anordnung von mindestens einer Vorrichtung sind, wobei jede der mindestens einen Vorrichtung dazu eingerichtet ist, zumindest teilweise beim Herstellen thermoplastischer Kunststoffe mitzuwirken. Insbesondere sollen Produktionsanlagen im Sinne der Erfindung umfasst sein, die dazu eingerichtet sind, Polycarbonat hinsichtlich der Temperatur und des Drucks stufenweise herzustellen. Dabei können die Temperaturen stufenweise im Bereich von 150°C bis 400°C festgesetzt werden, wobei eine Verweilzeit in jeder Stufe von 15 Minuten bis 5 Stunden betragen kann, und die Drücke in jeder Stufe können 1000 bis 0,01 mbar betragen.

Besonders bevorzugt nimmt die Temperatur von einer Stufe zur anderen zu und der Druck von einer zur nächsten Stufe ab.

Die Produktionsanlage kann zumindest eine oder mehrere Vorrichtungen aufweisen, die dazu eingerichtet sind, zu einem Produktionsvorgang eines thermoplastischen Kunststoffes beizutragen. Eine solche Vorrichtung kann zum Beispiel eine oder mehrere der folgenden Anlagen sein und/oder umfassen:

- Drucksensor;

- Einführungsanlage für Rohmaterialien, die zum Herstellen des Kunststoffes verwendet werden;

- Mischungsanlage, die dazu eingerichtet ist, Rohmaterialien zu mischen;

- Katalysator;

- Polymerisationsanlage;

- Kondensator;

- Vakuumpumpe;

- Übermittlungsanlage;

- Reaktor, der zum Einstellen der Viskosität eines Kunststoffes eingerichtet ist; und

- Statikmischer.

In der Regel werden Statikmischer im beschriebenen Prozessumfeld eingesetzt, um Additive in den Hauptstrom zuzumischen, im Allgemeinen um eine Dispergierung bei Mehrphasigkeit oder Mischung unterschiedlicher Komponenten zu realisieren oder den Wärmeübergang zu verbessern. Diese können vom Fachmann auf Basis des Stands der Technik entsprechend ausgelegt werden, beispielsweise nach einer der Druckschiften US4062524, DE2532355, US6394644, EP1617980 oder EP2255947. Die Verweilzeit beträgt zwischen 1 und 600 Sekunden, bevorzugt zwischen 10 und 100 Sekunden und besonders bevorzugt zwischen 20-60 Sekunden. Die Einbringung eines Statikmischers geht mit einem Druckverlust über dessen Länge einher.

Der Druck in der Produktionsanlage wird vorzugsweise durch Mittel zum Erfassen eines Drucks erfasst, wobei ein Druck einzeln oder an mehreren Positionen in der Produktionsanlage erfasst werden kann. Durch Erfassen eines Drucks an mehreren Positionen in der Produktionsanlage können Vergleiche durchgeführt werden, um zum Beispiel eine Information über einen Druckabfall, wie beispielsweise ein Differenzdruckwert, zu erhalten. Der Differenzdruckwert kann insbesondere eine Differenz zwischen einem ersten, an einer ersten Position, z. B. vor einem Statikmischer der Produktionsanlage, erfassten Druck und einem zweiten, an einer zweiten Position, z. B. nach dem Statikmischer erfassten Druck entsprechen.

Die Druckdifferenz kann insbesondere über den Statikmischer erfasst werden. Hierfür kann der Statikmischer durch die Struktur der Einbauten, die zur Dispergierung dienen, einen Durchströmungswiderstand mit sich herziehen. Dadurch entsteht über die Länge des Statikmischers ein Druckunterschied bzw. ein Druckverlust, der durch einen Druckwert charakterisiert werden kann. Der Statikmischer ist vorzugsweise in der Produktionsanlage hinter einem Viskosreaktor und nach einer Austragspumpe angeordnet.

Im Sinne der vorliegenden Erfindung wird unter dem Begriff Druckwert ein Wert verstanden, der für einen Druck oder einen Druckunterschied (z. B. Differenzdruckwert) in der Produktionsanlage indikativ ist. Dabei kann es sich um einen absoluten Wert oder um einen relativen Wert handeln. Ein relativer Wert, wie ein Differenzdruckwert, kann sich aus einer Differenz zwischen einem im Vorfeld festgesetzten Wert und einem aktuellen Wert ergeben. Ebenso kann sich ein Differenzdruckwert aus einer Differenz zwischen einem Wert, der im Laufe einer zuvor durchgeführten Erfassung ermittelt und vermerkt wurde und einem aktuellen Wert ergeben. Hier wird unter dem Begriff Druckwert insbesondere eine Differenz zwischen einem Druck, der vor einer Vorrichtung der Produktionsanlage erfasst wurde, und einem Druck, der nach dieser Vorrichtung erfasst wurde, verstanden. Folglich entspricht ein solcher Druckwert einem Druckunterschied zwischen dem Eingang und dem Ausgang der betroffenen Vorrichtung. Ist die betroffene Vorrichtung zwischen zwei benachbarten Stufen in der Produktionsanlage angeordnet, dann entspricht ein solcher Druckwert einem Druckabfall zwischen den zwei Stufen. Im Folgenden wird der Druckwert mit $D_{mess}$ bezeichnet.

Unter dem oben genannten geschätzten Wert, der für eine Viskosität indikativ ist, wird eine Größe verstanden, die sich im Rahmen des angesprochenen Bestimmens aus einer Auswertung bzw. einer Umwandlung des zuvor erfassten Druckwerts $D_{mess}$ ergibt. Zur Umwandlung des erfassten Druckwerts $D_{mess}$ kann beispielsweise eine Berechnung durchgeführt werden, bei der eine Korrelationsbeziehung zwischen Druck und Viskosität verwendet wird. Dazu kann zum Beispiel das sogenannte Hagen-Poiseuillsche Gesetz verwendet werden, das durch Auswahl entsprechender Parameter eine Berücksichtigung einer Temperaturabhängigkeit des viskosen Verhaltens des betroffenen thermoplastischen Kunststoffes ermöglicht. Im Folgenden wird der Einfachheit halber der geschätzte Wert, der für eine Viskosität indikativ ist, mit $V_g$ bezeichnet.

Es hat sich gezeigt, dass eine solche theoretische Korrelation den Prozess alleine nicht abbilden kann, d.h. es kann zu Diskrepanzen zwischen den mittels der Korrelation ermittelten Viskositätswerten und den Labormessungen kommen. Über ein Bias-Update erfolgt vorzugsweise eine Rückführung der Laborwerte, sodass auch eine eventuelle zeitliche Änderung der Korrelation erfasst werden kann. Auf diese Weise wird die Abweichung zwischen Vorhersage und Labormessung minimiert.

Gemäß der vorliegenden Erfindung wird ein für das viskose Verhalten des thermoplastischen Kunststoffes indikativer Viskositätswert zumindest teilweise in Abhängigkeit eines Korrekturfaktors bestimmt. Zum Vereinfachen des Verständnisses wird dieser Viskositätswert im Folgenden mit $V_{KF}$ bezeichnet. Die Bestimmung von $V_{KF}$ erfolgt beispielsweise auf Basis des geschätzten Werts $V_g$ und unter Berücksichtigung eines Korrekturfaktors KF. Da der Korrekturfaktor für einen Anlagenzustand indikativ ist, und der Anlagenzustand zumindest teilweise durch mindestens einen herrschenden Produktionsparameter bestimmt ist, können Störfaktoren, die mit der Produktionsanlage verbunden sind, in dem Korrekturfaktor berücksichtigt werden. Somit entspricht $V_{KF}$ einer Viskosität, die näher an der tatsächlichen Viskosität des hergestellten Kunststoffes ist, als zum Beispiel $V_g$.

Bei einer ersten Ausführungsform des Verfahrens entspricht der Korrekturfaktor KF dem Ergebnis einer statistisch basierten Berechnung, wobei die statistische Berechnung auf historischen Werten für das Verhältnis zwischen dem geschätzten Wert $V_g$, der für eine Viskosität indikativ ist, und einer im Labor gemessenen Viskosität $V_{labor}$ basiert. Dadurch können einerseits Faktoren, die mit der Produktionsanlage verbunden sind, und andererseits Störfaktoren, die nicht vorhersehbar sind, bei der Berechnung des Viskositätswerts $V_{KF}$ berücksichtigt werden.

Bei einer ersten Konstellation wird die Viskosität $V_{KF}$ mit dem Korrekturfaktor KF durch die Differenz zwischen der im Labor gemessenen Viskosität $V_{labor}$ und dem geschätzten Wert $V_g$, also mit $KF = V_{labor} - V_g$, und eine bestimmte Eigenschaft der entnommen Probe, die linear proportional zum Druckverlust über den Statik-Mischer (z.B. V-Zahl) ist, bestimmt. Diese Konstellation führt dazu, dass der Korrekturfaktor KF in vorteilhafter Weise durch eine lineare Abhängigkeit (zu $V_{labor}$ und $V_g$) ausgedrückt werden kann. $V_g$ kann in dieser Konstellation durch eine lineare Abhängigkeit anhand von konstanten Anpassungsparametern dl, d2, d3 ausgedrückt werden.

Bei einer weiteren Konstellation ist eine Eigenschaft der entnommen Probe anti-proportional zum Druckunterschied über den Statik-Mischer (z.B. MVR). Hier wird die Beziehung $KF = 1/V_{labor} - 1/V_g$ gewählt, um so den Korrekturfaktor KF durch eine lineare Abhängigkeit zu $1/V_{labor}$ und $1/V_g$ auszudrücken. $1/V_g$ kann kann in dieser Konstellation durch eine lineare Abhängigkeit konstanten Anpassungsparametern dl, d2, d3 ausgedrückt werden.

Bei einer weiteren Konstellation ist eine Eigenschaft der entnommen Probe anti-proportional zum Druckunterschied über den Statik-Mischer (z.B. MVR). Hier wird die Beziehung KF = $(V_{labor}/a)^{\wedge l/b}$-$(V_g/a)^{\wedge l/b}$ gewählt, um dann den Korrekturfaktor KF durch eine lineare Abhängigkeit zu $(V_{labor}/a)^{\wedge l/b}$ und $(V_g/a)^{\wedge l/b}$ mit Konstanten a und b auszudrücken. $(V_g/a)^{\wedge l/b}$ kann kann in dieser Konstellation durch eine lineare Abhängigkeit konstanten Anpassungsparametern dl, d2, d3 ausgedrückt werden.

Unter dem Begriff Laborviskosität werden insbesondere Ergebnisse mindestens einer Laboruntersuchung verstanden, die aus der Produktionsanlage entnommene Proben einer Analyse unterzieht. So entspricht eine solche Laborviskosität einer direkt gemessenen Viskosität eines durch die Produktionsanlage hergestellten Kunststoffes. Im Folgenden wird eine solche Viskosität mit $V_{labor}$ bezeichnet. Des Weiteren wird eventuelles Rauschen in den Laborwerten und Anlagensensoren gefiltert, um diesen Einfluss auf die Berechnung des Korrekturfaktors KF zu verringern.

Ein historischer Wert ist beispielsweise für ein Verhältnis zwischen dem geschätzten Wert $V_g$ und der Laborviskosität $V_{labor}$ indikativ. So entspricht ein historischer Wert beispielsweise einer eventuellen Diskrepanz zwischen einem direkten gemessenen und einem durch theoretische Berechnung geschätzten viskosen Verhalten. Durch Ansammeln von mehreren solcher historischer Werte im Laufe der Zeit kann ein Verlauf bzw. eine Historie dieses Verhältnisses wiedergegeben werden. Anschließend kann dieser Verlauf durch statistische Berechnung ausgewertet werden, um dann z. B. im Korrekturfaktor für die Berechnung des Viskositätswert $V_{KF}$ berücksichtigt zu werden.

Bei einer weiteren Ausführungsform des Verfahrens ist der mindestens eine herrschende Produktionsparameter für einen oder mehreren der folgenden Kennwerte i) bis iii) indikativ:

i) Temperatur des Kunststoffs;

ii) Druck; und

iii) Durchsatz durch die Produktionsanlage.

Dadurch können Änderungen dieser Produktionsparameter bzw. der Einfluss dieser einzelnen Produktionsparameter bei der Berechnung vom Viskositätswert $V_{KF}$ durch den Korrekturfaktor berücksichtigt werden.

Dabei wird der Viskositätswert $V_{KF}$ vorzugsweise wie folgt berechnet, wobei die Beziehung zwischen der Temperatur T, der gemessenen Druckdifferenz $D_{mess}$ und dem Volumenstrom S durch die Anlage in Beziehung gebracht werden. Im Folgenden ist die Viskosität $V_{KF}$ auf die Temperatur der Labormessungen ($T_{labor}$) normiert.

Bei einer Konstellation, in der die Viskosität proportional zum Druckverlust über den Statik-Mischer ist (z.B. V-Zahl), ergibt sich folgender Zusammenhang

$$[V_{KF}(T)] = [f(T)/S]^*[(D_{mess}{}^*d1) + d2] + d3 + KF$$

Bei einer Konstellation, in der die Viskosität anti-proportional zum Druckverlust über den Statik-Mischer ist (z.B. MVR), ergibt sich

$$[1/V_{KF}(T)] = [f(T)/S]^*[(D_{mess}{}^*d1) + d2] + d3 + KF.$$

Bei einer Konstellation, in der die Viskosität über eine nichtlineare Abhängigkeit in der Form $V \sim a^*(D_{mess})^{\wedge}b$ zum Druckverlust $D_{mess}$ über den Statik-Mischer bestimmt werden kann, ergibt sich mit Konstanten a und b

$$[V_{KF}(T)/a]^{\wedge(1/b)} = [f(T)/S]^*[(D_{mess}{}^*d1) + d2] + d3 + KF.$$

Hierbei sind dl, d2 und d3 Konstanten, die mit dem hergestellten Kunststoff verbunden sind. Diese Konstanten (Zahlenwerte) ergeben sich in der Regel aus einer Parameteranpassung nach der Least Squares - Methode zwischen den Laborwerten und den Betriebsdaten zunächst ohne den KF-Wert. Damit sind die exakten Zahlenwerte Anlagen- und/oder produktspezifisch.

f(T) ist hierbei die Temperaturkorrektur und kann wie folgt ausgedrückt werden:

$$f(T) = \exp(-T)/\exp(-T_{labor}),$$

wobei vorzugsweise eine Temperatur von $T_{labor}$=300°C angenommen wird.

Der Korrekturfaktor KF ergibt sich dann bei einer Anpassung im laufenden Betrieb (bias update).

Bei einer weiteren Ausführungsform des Verfahrens sind die historischen Werte indikativ für den Anlagenzustand und eine Art des thermoplastischen Kunststoffes. Beispielsweise basieren die zuvor erfassten historischen Werte zumindest teilweise auf dem Anlagenzustand und einer Art des thermoplastischen Kunststoffes. Dadurch kann die Art des aktuell hergestellten Kunststoffes bei der Berechnung von $V_{KF}$ berücksichtigt werden. Da verschiedene Arten von Kunststoff in der Regel verschiedenen viskosen Verhalten aufweisen, ergibt somit die Berechnung einen Wert für $V_{KF}$, der näher $V_{real}$ ähnelt bzw. diesem entspricht.

Bei einer weiteren Ausführungsform des Verfahrens sind die historischen Werte das Ergebnis einer Reihenmessung. Als Reihenmessung wird hier das Wiederholen einer Probenentnahme und Messung der Viskosität der Probe über eine bestimmte Zeitspanne und mit bestimmten Zeitintervallen verstanden. So wird eine Reihe von historischen Werten erhalten. Die auf den historischen Werten basierte statistische Berechnung liefert dann den Verlauf des Verhältnisses zwischen $V_g$ und $V_{labor}$ über die Zeitspanne der Reihenmessung.

Die Reihenmessung kann beispielsweise einmalig durchgeführt werden. Ein Wiederholen der Reihenmessung wird jedoch bevorzugt, um bei der Berechnung von $V_{KF}$ ein möglichst aktuelles Verhältnis zwischen $V_g$ und $V_{labor}$ zu berücksichtigen. Hierzu können zum Beispiel täglich 3 bis 12 Proben im Laufe des Tages aus der Produktionsanlage entnommen werden. Dabei wird die erste Art eines Kunststoffes zumindest durch einen der folgenden Größen definiert: Molekulargewicht, Verzweigung der Polymerketten des Kunststoffes, Lösungsviskosität, Farbe (YI) und/oder Schmelze-Volumenfließrate (MVR) bzw. Schmelzflussindex (MVI). Es versteht sich, dass es unterschiedliche Arten eines Kunststoffes geben kann.

Bei einer weiteren Ausführungsform des Verfahrens, umfasst das Verfahren ferner die folgenden Schritte:

- Vergleichen des bestimmten und für das viskose Verhalten des thermoplastischen Kunststoffes indikativen Viskositätswerts mit einem Sollviskositätswert;

- Bestimmen mindestens einer Regelungsinformation, die zumindest teilweise auf dem Ergebnis des Vergleichs basiert; und

- Ausgeben oder Veranlassen des Ausgebens der bestimmten Regelungsinformation, wobei basierend auf der bestimmten Regelungsinformation eine Steuerung und/oder Regelung der Produktionsanlage durchführbar ist.

Dadurch werden einerseits Informationen gewonnen, die die Viskosität des hergestellten Kunststoffes zeitnah wiedergeben, und andererseits die Möglichkeit geschaffen, die Steuerung der Produktionsanlage an das Verhalten der Viskosität des hergestellten Kunststoffes gegenüber einer zu erreichenden Viskosität anzupassen.

So kann dann auf Grund der gewonnenen Informationen ein sinnvoller Stelleingriff erfolgen, beispielsweise die Veränderung des Drucks in einem oder mehreren der Viskosreaktoren.

Unter dem Begriff Sollviskositätswert wird ein Wert verstanden, der im Vorfeld definiert wurde, zum Beispiel im Rahmen eines Anforderungsprofils für die Produktion. Der Sollviskositätswert kann von einer herzustellenden Kunststoffart zu einer anderen variieren. Im Folgenden wird der Sollviskositätswert mit $V_{soll}$ bezeichnet.

Das Ergebnis des Vergleichs zwischen dem für das viskose Verhalten des thermoplastischen Kunststoffes indikativen Viskositätswert $V_{KF}$ mit dem Sollviskositätswert kann einen absoluten Differenzwert oder einen Wert innerhalb eines Toleranzbereiches um den Sollviskositätswert liefern.

Die Regelungsinformation ist vorzugsweise indikativ für einen der oben genannten Produktionsparameter. Dabei entspricht die Regelungsinformation einem für einen oder mehreren dieser Produktionsparameter zu erreichenden Wert, um zukünftig einen Viskositätswerts $V_{KF}$ zu erhalten, der möglichst nah am Sollviskositätswert $V_{soll}$ ist bzw. liegt.

Bei einer weiteren Ausführungsform des Verfahrens wird die Produktionsanlage zumindest teilweise in Abhängigkeit der Regelungsinformation gesteuert und/oder geregelt. Somit ergibt sich ein Regelkreis, der eine Berücksichtigung zumindest der Art des hergestellten Kunststoffes und des Anlagenzustandes für eine Annäherung der Viskosität des hergestellten Kunststoffes an dem Sollviskositätswert ermöglicht.

Unter dem Begriff Regeln bzw. Regelung wird im Rahmen der vorliegenden Erfindung einen Vorgang gemäß der Norm DIN IEC 60050-351 verstanden, bei dem fortlaufend eine Größe, die Regelgröße erfasst, mit einer anderen Größe, der Führungsgröße, verglichen und im Sinne einer Angleichung an die Führungsgröße beeinflusst wird. Kennzeichnend für das Regeln ist der geschlossene Wirkungsablauf, bei dem die Regelgröße sich im Wirkungsweg eines Regelkreises fortlaufend selbst beeinflusst. Ein Steuern bzw. eine Steuerung hingegen umfasst lediglich ein Einstellen einer gemäß der Steuerung vorgesehenen Größe, ohne dass sich diese Größe fortlaufend selbst beeinflusst.

Dabei handelt es sich bei der Regelgröße um den Druckwert $D_{mess}$, der in der Produktionsanlage erfasst wird. Ferner handelt es sich bei der Führungsgröße um den Sollviskositätswert $V_{soll}$. Der Vergleich für das Regeln erfolgt, wie oben beschrieben, zwischen dem auf Basis des Druckwerts $D_{mess}$ berechneten Viskositätswert $V_{KF}$ und dem Sollviskositätswert $V_{soll}$.

Bei einer weiteren Ausführungsform des Verfahrens bildet das Verfahren einen Regelkreis und läuft während der Herstellung eines thermoplastischen Kunststoffs kontinuierlich und/oder diskret in vorbestimmten Zeitintervallen ab.

Durch einen kontinuierlichen Ablauf des Regelns kann eine Diskrepanz zwischen dem kontinuierlichen Charakter des Herstellungsprozesses und dem diskreten Charakter der eingangs beschriebenen Probenentnahmen für Laboruntersuchungen ausgeglichen werden. Somit werden sogenannte Totzeiten der eingangs genannten Art vermieden und es können in der Produktionsanlage Vorrichtungen eingesetzt werden, die eine kurze Reaktionszeit aufweisen. Zudem können Abweichungen zwischen der Viskosität des hergestellten Kunststoffes und dem Sollviskositätswert $V_{soll}$ zeitnah ausgeglichen werden.

Bei einer weiteren Ausführungsform des Verfahrens umfasst das Verfahren ferner den folgenden Schritt:

- Produktwechsel des von der Produktionsanlage hergestellten thermoplastischen Kunststoffs von einer ersten Art des thermoplastischen Kunststoffes zu einer weiteren Art des thermoplastischen Kunststoffes, wobei der Regelkreis weiter läuft.

Somit kann beim Regeln die Art von zwei unterschiedlichen, nacheinander durch die Produktionsanlage hergestellten Kunststoffe berücksichtigt werden. Dadurch, dass der Regelkreis weiter läuft, also dass zwischen zwei Korrekturfaktoren, die jeweils von der Art eines Kunststoffes abhängig sind, umgeschaltet wird, wird das Entstehen von B-Ware und/oder Ausschussware beim Produktwechsel verringert bzw. minimiert.

Bei einer weiteren Ausführungsform des Verfahrens basiert der Korrekturfaktor für das Bestimmen des für das viskose Verhalten des thermoplastischen Kunststoffes indikativen Viskositätswerts nach dem Produktwechsel auf historischen Werten, die zumindest teilweise für die weitere Art des thermoplastischen Kunststoffes indikativ sind. Der Korrekturfaktor KF kann unter anderem basierend auf historischen Werten unter Anwendung eines Kalman Filters, eines Median Filters bzw. eines Verzögerungselements von Ordnung n (PTn) berechnet werden. Dadurch werden nicht nur zum Beispiel aus der Literatur bekannte Eigenschaften des Kunststoffes berücksichtigt, sondern auch auf Anlage- und/oder Produktionsbedingungen bezogene Komponente berücksichtigt. In der Folge kann die Produktqualität verbessert werden.

Die erfindungsgemäße Aufgabe wird ferner durch eine Vorrichtung gelöst, die zur Ausführung und/oder Steuerung eines oder mehreren der oben beschriebenen Verfahren eingerichtet ist, oder die jeweilige Mittel zur Ausführung und/oder Steuerung der Schritte eines oder mehreren der oben beschriebenen Verfahren umfasst.

Mittel der Vorrichtung gemäß der vorliegenden Erfindung können Hardware- und/oder Software-Komponenten umfassen. Die Mittel können beispielsweise mindestens einen Speicher mit Programmanweisungen eines Computerprogramms und mindestens einen Prozessor ausgebildet zum Ausführen von Programmanweisungen aus dem mindestens einen Speicher umfassen. Dementsprechend soll gemäß der vorliegenden Erfindung auch eine Vorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, das Ausgabemodul bzw. das Sensormodul zu veranlassen, das Verfahren gemäß dem ersten Aspekt bzw. dem zweiten Aspekt der Erfindung auszuführen und/oder zu steuern.

Alternativ oder zusätzlich können die Mittel der Vorrichtung ferner einen oder mehrere Sensoren und/oder eine oder mehrere Kommunikationsschnittstellen umfassen.

Unter einer Kommunikationsschnittstelle soll beispielsweise eine drahtlose Kommunikationsschnittstelle und/oder eine drahtgebundene Kommunikationsschnittstelle verstanden werden.

Eine drahtlose Kommunikationsschnittstelle ist beispielsweise eine Kommunikationsschnittstelle gemäß einer drahtlosen Kommunikationstechnik. Ein Beispiel für eine drahtlose Kommunikationstechnik ist eine lokale Funknetztechnik wie Radio Frequency Identification (RFID) und/oder Near Field Communication (NFC) und/oder Bluetooth (z.B. Bluetooth Version 2.1 und/oder 4.0) und/oder Wireless Local Area Network (WLAN). RFID und NFC sind beispielsweise gemäß den ISO-Standards 18000, 11784/11785 und dem ISO/IEC-Standard 14443-A und 15693 spezifiziert. WLAN ist zum Beispiel in den Standards der IEEE-802.11-Familie spezifiziert. Ein weiteres Beispiel für eine drahtlose Kommunikationstechnik ist eine überörtliche Funknetztechnik wie beispielsweise eine Mobilfunktechnik, zum Beispiel Global System for Mobile Communications (GSM) und/oder Universal Mobile Telecommunications System (UMTS) und/oder Long Term Evolution (LTE). Die GSM-, UMTS- und LTE-Spezifikationen werden von dem 3rd Generation Partnership Project (3GPP) gepflegt und entwickelt.

Eine drahtgebundene Kommunikationsschnittstelle ist beispielsweise eine Kommunikationsschnittstelle gemäß einer drahtgebundenen Kommunikationstechnik. Beispiele für eine drahtgebundene Kommunikationstechnik sind ein Local Area Network (LAN) und/oder ein Bus-System, zum Beispiel ein Controller-Area-Network-Bus (CAN-Bus) und/oder ein universeller serieller Bus (USB). CAN-Bus ist beispielsweise gemäß dem ISO-Standard ISO 11898 spezifiziert. LAN ist zum Beispiel in den Standards der IEEE-802.3-Familie spezifiziert. Es versteht sich, dass das Ausgabemodul und/oder das Sensormodul auch andere nicht aufgeführte Mittel umfassen können.

Des Weiteren wird gemäß der vorliegenden Erfindung ein Computerprogramm offenbart, umfassend Programmanweisungen, die dazu ausgebildet sind, eine Vorrichtung zur Ausführung und/oder Steuerung des Verfahrens gemäß dem ersten und/oder zweiten Aspekt bzw. des Systems gemäß der vorliegenden Erfindung zu veranlassen, wenn das Computerprogramm durch einen Prozessor ausgeführt wird.

Ferner wird ein computerlesbares Speichermedium offenbart, welches ein Computerprogramm gemäß der vorliegenden Erfindung enthält. Ein computerlesbares Speichermedium kann zum Beispiel als magnetisches, elektrisches, elektro-magnetisches, optisches und/oder andersartiges Speichermedium ausgebildet sein. Ein solches computerlesbares Speichermedium ist vorzugsweise gegenständlich (also "berührbar"), zum Beispiel ist es als Datenträgervorrichtung ausgebildet. Eine solche Datenträgervorrichtung ist beispielsweise tragbar oder in einer Vorrichtung fest installiert. Beispiele für eine solche Datenträgervorrichtung sind flüchtige oder nicht-flüchtige Speicher mit wahlfreiem-Zugriff (RAM) wie zum Beispiel NOR-Flash-Speicher oder mit sequentiellen-Zugriff wie NAND-Flash-Speicher und/oder Speicher mit Nur-Lese-Zugriff (ROM) oder Schreib-Lese-Zugriff. Computerlesbar soll zum Beispiel so verstanden werden, dass das Speichermedium von einem Computer bzw. einer Servervorrichtung (aus)gelesen und/oder beschrieben werden kann, beispielsweise von einem Prozessor.

Unter dem Begriff Steuerung wird im Rahmen der vorliegenden Erfindung im Allgemeinen ein Beeinflussen eines oder mehrerer Produktionsparameter über eine oder mehrere Vorrichtungen verstanden. Ein solches Steuern ist von einem Regeln bzw. einer Regelung in Abhängigkeit des Ergebnisses eines Vergleichs zwischen einem Ist-Wert und einem Sollwert umfasst und bei z. B. ein gesteuerter Produktionsparameter wiederrum Einfluss auf eine weitere Iteration des derart geregelten Produktionsparameters hat. Vorliegend erfolgt ein Vergleich zwischen $V_{KF}$ und $V_{soll}$.

Die Vorrichtung kann eine gesamte Produktionsanlage darstellen oder zumindest ein Teil einer Produktionsanlage sein. Weitere Anlagen, die beim Herstellen von thermoplastischen Kunststoffen einen Beitrag leisten, können ebenfalls als Vorrichtung im Sinne der vorliegenden Erfindung angesehen werden bzw. von dieser umfasst sein.

Bei einer ersten Ausführungsform der Vorrichtung ist ein Viskosreaktor vorgesehen. Der Vorteil hierfür ist beispielsweise, dass ein solcher Viskosreaktor von dem oben beschriebenen Regelkreis umfasst sein kann. Demnach kann die Viskosität des hergestellten Kunststoffes durch ein Regeln bzw. eine Regelung des Viskosreaktors angepasst werden. Insbesondere kann die Viskosität durch Einstellung des Drucks, genauer des Vakuums, im Hochviskosreaktor beeinflusst werden.

Dabei ist der Statikmischer, durch den die Druckdifferenz ermittelt wird, vorzugsweise nach der Austragspumpe und am Ausgang des Viskosreaktors angeordnet.

Unter einem Viskosreaktor wird insbesondere ein Reaktor verstanden, der zum gezielten Beeinflussen der Viskosität des hergestellten Kunststoffes eingerichtet ist, zum Beispiel durch ein Beeinflussen des Drucks in dem Reaktor. Es werden beispielsweise Scheibenreaktoren eingesetzt. Diese durchmischen und haben die Aufgabe eine große Oberfläche zu erzeugen, dadurch dass, die viskose Masse quasi als Film hochgezogen wird. Dadurch können beispielsweise Lösungsmittel Abdampfen. Mit zunehmender Reaktorlänge/Reaktionszeit nimmt die Viskosität zu.

Die Viskosität ändert sich mit der Verweilzeit. Es können mehr als ein Reaktor, ausgelegt für unterschiedliche Viskositäten bzw. Viskositätsbereiche, verwendet werden.

Die erfindungsgemäße Aufgabe wird ferner durch ein System gelöst, das eine oder mehrere Vorrichtungen umfasst, die zusammen dazu ausgebildet und/oder eingerichtet sind, einen oder mehrere der oben beschriebenen Verfahrensschritte auszuführen. Das System umfasst beispielsweise Erfassungsmitteln zum Erfassen eines Druckwerts in der Produktionsanlage, Bestimmungsmittel zum Bestimmen eines geschätzten Werts, der für eine Viskosität indikativ ist, wobei das Bestimmen zumindest teilweise auf dem erfassten Druckwert und zumindest teilweise auf einer Temperaturabhängigkeit eines viskosen Verhaltens des thermoplastischen Kunststoffs basiert, und Bestimmungsmittel zum Bestimmen eines für das viskose Verhalten des thermoplastischen Kunststoffes indikativen Viskositätswerts, wobei das Bestimmen zumindest teilweise auf einem Korrekturfaktor basiert, der für einen Anlagenzustand indikativ ist, und wobei der Anlagenzustand zumindest teilweise durch mindestens einen herrschenden Produktionsparameter bestimmt ist.

Bei einer ersten Ausführungsform des Systems sind Eingabemittel zur Eingabe historischer Werte und/oder Eingabe eines Sollviskositätswerts vorgesehen. Dadurch können historische Werte und/oder ein Sollviskositätswert beim Steuern und/oder Regeln einer oder mehrerer Vorrichtungen des Systems berücksichtigt werden, die nicht durch das System selbst erzeugt werden, oder die nicht bereits im System gespeichert sind.

Von besonders praktischer Bedeutung ist eine solche Eingabe für die Einstellung eines durch das System zuvor unbekannten Sollviskositätswerts, zum Beispiel für das Herstellen eines neuen Kunststoffes.

Bei einer weiteren Ausführungsform des Systems sind Bestimmungsmittel zum Bestimmen mindestens einer Regelungsinformation vorgesehen, wobei das Bestimmen auf dem Ergebnis eines Vergleichs zwischen dem bestimmten und für das viskose Verhalten des thermoplastischen Kunststoffes indikativen Viskositätswert mit einem Sollviskositätswert basiert.

Die Bestimmungsmittel können beispielsweise ein computerlesbares Speichermedium sein oder ein Mittel der Vorrichtung nach der vorigen Beschreibung.

Bei einer weiteren Ausführungsform des Systems sind Ausgabemittel zum Ausgeben der mindestens einen bestimmten Regelungsinformation vorgesehen. Dies ermöglicht eine Kommunikation zwischen Vorrichtungen des Systems, die in einem Regelkreis mitwirken. Somit kann zum Beispiel zunächst eine Regelungsinformation durch ein Bestimmungsmittel bestimmt werden, dann durch die Ausgabemittel ausgegeben werden, um anschließend zu einer Regelungseinrichtung übermittelt zu werden.

Bei einer weiteren Ausführungsform des Systems ist eine Regelungseinrichtung vorgesehen, die zur Durchführung einer Steuerung und/oder Regelung der eine oder mehreren Vorrichtungen eingerichtet ist, wobei die Steuerung und/oder Regelung zumindest teilweise auf der mindestens eine bestimmten Regelungsinformation basiert.

Unter dem Begriff Regelungseinrichtung wird insbesondere eine Einrichtung verstanden, die in einem Regelkreis zur Verbindung zwischen mindestens einem Mittel zum Erfassen eines Druckwerts und mindestens einer Steuerungseinrichtung mindestens einer Vorrichtung des Systems eingerichtet ist. Vorzugsweise ist eine solche Steuerungseinrichtung zum Beeinflussen eines Produktionsparameters, zum Beispiel eines Drucks, eingerichtet. Hierbei kann die Regelungseinrichtung Mittel zum Berechnen eines geschätzten Werts für die Viskosität $V_g$, Mittel zum Berechnen eines Viskositätswert $V_{KF}$, Mittel zum Speichern einer gemessenen realen Viskosität $V_{labor}$, Mittel zum Speichern historischer Werte und mindestens eines Sollviskositätswerts $V_{soll}$, Mittel zum Vergleichen mindestens zwei dieser Werte untereinander, sowie Mittel zum Übermitteln von Informationen zwischen dem Mittel zum Erfassen eines Druckwerts und der Steuereinrichtung aufweisen und/oder umfassen.

## Kurze Beschreibung der Figuren

Es zeigen

Fig. 1     eine Ausgestaltung eines Verfahrens zur Steuerung und/oder Regelung einer zur Herstellung von thermoplastischem Kunststoff eingerichteten Produktionsanlage in einer schematischen Darstellung; und

Fig. 2     eine Ausgestaltung eines Systems zum Ausführen des Verfahrens der Fig. 1 in einer schematischen Darstellung.

## Detaillierte Beschreibung einiger beispielhafter Ausführungsformen

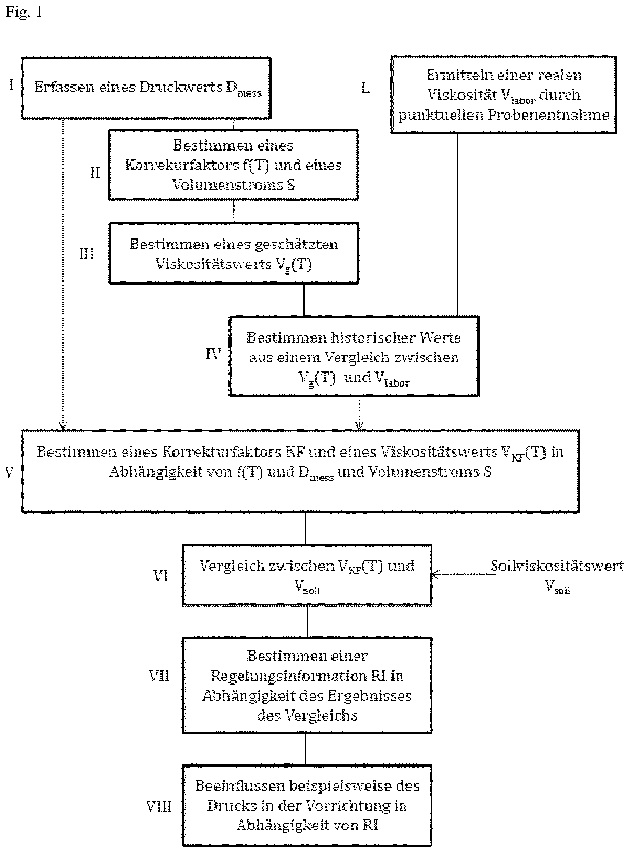

Fig. 1 zeigt eine Ausgestaltung eines Verfahrens zur Steuerung und/oder Regelung einer zur Herstellung von thermoplastischem Kunststoff eingerichteten Produktionsanlage in einer schematischen Darstellung. Im Folgenden werden zur Unterstützung des Verständnisses die Schritte des gezeigten Verfahrens mit römischen Ziffern bezeichnet. So sind in der Fig. 1 die folgenden Schritte gezeigt:

I: Erfassen eines Druckwerts $D_{mess}$;

II: Bestimmen eines Korrekturfaktors f(T), bestimmen eines Volumenstroms S;

III: Bestimmen eines geschätzten Viskositätswerts $V_g(T)$;

IV: Bestimmen historischer Werte aus einem Vergleich zwischen $V_g(T)$ und $V_{labor}$;

V: Bestimmen eines Viskositätswerts $V_{KF}(T)$ in Abhängigkeit von f(T),$D_{mess}$, dem Volumenstrom S und dem Korrekturfaktor KF

VI: Vergleich zwischen $V_{KF}(T)$ und $V_{soll}$;

VII: Bestimmen einer Regelungsinformation RI in Abhängigkeit des Ergebnisses des Vergleichs; und

VIII: Beeinflussen beispielsweise des Drucks in der Vorrichtung in Abhängigkeit von RI.

Die Schritte I bis VIII werden nacheinander in der oben aufgezählten Reihenfolge durchgeführt.

Ein weiterer Schritt, der in der Fig. 1 mit L bezeichnet ist, entspricht dem Ermitteln der Laborviskosität $V_{labor}$ durch punktuelle Probenentnahmen und direkte Messung der Viskosität der entnommenen Proben.

Im ersten Schritt I werden im Verlauf der Produktionsanlage ein erster Druck vor einer Vorrichtung der Produktionsanlage und ein zweiter Druck nach dieser Vorrichtung gemessen. Es wird die Differenz zwischen dem ersten Druck und dem zweiten Druck berechnet, woraus der Druckwert $D_{mess}$ bestimmt wird. So entspricht $D_{mess}$ einer Druckdifferenz, die zwischen dem Eingang und dem Ausgang der Vorrichtung herrscht.

Im zweiten Schritt II werden die Temperaturkorrektur f(T) sowie der Volumenstrom S bestimmt.

Im dritten Schritt III wird der Druckwert $D_{mess}$ in einer Hagen-Poiseuillschen Korrelationsbeziehung zwischen Druck und Viskosität und unter Berücksichtigung einer Temperaturabhängigkeit einbezogen. Daraus ergibt sich der geschätzte Wert $V_g(T)$, der für eine Viskosität indikativ ist, und von der Temperatur T abhängig ist.

Im vierten Schritt IV wird ein Vergleich zwischen dem sich aus dem Schritt II ergebenden Wert $V_g(T)$ und der im Schritt L ermittelten Viskosität $V_{labor}$ durchgeführt. Dadurch wird ein Verhältnis zwischen der realen, direkten gemessenen Viskosität des hergestellten Kunststoffes und der berechneten, eingeschätzten Viskosität bestimmt. Dieses Verhältnis wird in historischen Werten ausgedruckt und in dem weiteren Schritt verwendet.

Im fünften Schritt V wird anhand des im Schritt I gemessenen Druckwerts $D_{mess}$, der in Schritt II ermittelten Temperaturkorrektur f(T), dem Volumenstrom S ein Viskositätswert $V_{KF}(T)$ bestimmt.

Für ein Messverfahren, bei dem die Viskosität proportional zum Druckverlust über den Statik-Mischer ist (z.B. V-Zahl) ergibt sich folgender Zusammenhang

$$[V_{KF}(T)] = [f(T)/S]*[(D_{mess}*d1) + d2] + d3 + KF$$

Für ein Messverfahren, bei dem die Viskosität anti-proportional zum Druckverlust über den Statik-Mischer ist (z.B. MVR) ergibt sich

$$[1/V_{KF}(T)] = [f(T)/S]*[(D_{mess}*d1) + d2] + d3 + KF.$$

Für ein Messfahren, bei dem die Viskosität über eine nichtlineare Abhängigkeit in der Form $V \sim a*(D_{mess})^b$ zum Druckverlust $D_{mess}$ über den Statik-Mischer bestimmt werden kann, ergibt sich mit Konstanten a und b

$$[V_{KF}(T)/a]^{\wedge(1/b)} = [f(T)/S]*[(D_{mess}*d1) + d2] + d3 + KF.$$

Hierbei sind dl, d2 und d3 Konstanten, die vomhergestellten Kunststoff abhängig sind. Diese Konstanten (Zahlenwerte) ergeben sich in der Regel aus einer Parameteranpassung nach der Least Squares - Methode zwischen den Laborwerten und den Betriebsdaten zunächst ohne den Korrekturfaktor KF. Damit sind die exakten Zahlenwerte Anlagen- und/oder produktspezifisch.

Im sechsten Schritt VI wird der aus dem vorigen Schritt bestimmte Wert $V_{KF}(T)$ mit einem Sollviskositätswert $V_{soll}$ verglichen. Dabei handelt es sich bei $V_{soll}$ um eine Reihe von Werten, die jeweils einer Viskosität für eine spezifische Temperatur entsprechen. So erfolgt der Vergleich zwischen dem Wert $V_{KF}$ für eine Temperatur $T_1$ und dem Sollviskositätswert für dieselbe Temperatur $T_1$. Das Ergebnis des Vergleichs wird durch einen relativen Wert ausgedrückt, dessen positives oder negatives Vorzeichen von einer Differenz zwischen $V_{KF}(T_1)$ und $V_{soll}(T_1)$ abhängig ist, und dessen absoluter Betrag dem absoluten Betrag dieser Differenz gleicht.

Im siebten Schritt VII wird auf Basis des Ergebnisses des Vergleichs vom Schritt VI eine Regelungsinformation RI bestimmt. Hier ist die Regelungsinformation eine Information über einen Druck, der in der Vorrichtung der Produktionsanlage einzustellen ist, um die Differenz zwischen $V_{KF}(T1)$ und $V_{soll}(T1)$ zu verringern oder konstant zu halten, wenn diese dem gewünschten Wert entspricht. Meistens wird der Druck geregelt, allerdings können auch Temperatur und Volumenstrom adaptiert werden.

Es handelt sich bei der Vorrichtung um die Vorrichtung, vor bzw. nach der im Schritt I der erste Druck und der zweite Druck gemessen wurde.

Im achten Schritt VIII wird die Regelungsinformation RI aus dem Schritt VII zur Steuerung und/oder Regelung (z. B. Einstellen) der Vorrichtung verwendet, wodurch der Druck in der Vorrichtung beeinflusst wird. Bevorzugt handelt es sich bei der Vorrichtung um einen Viskosreaktor.

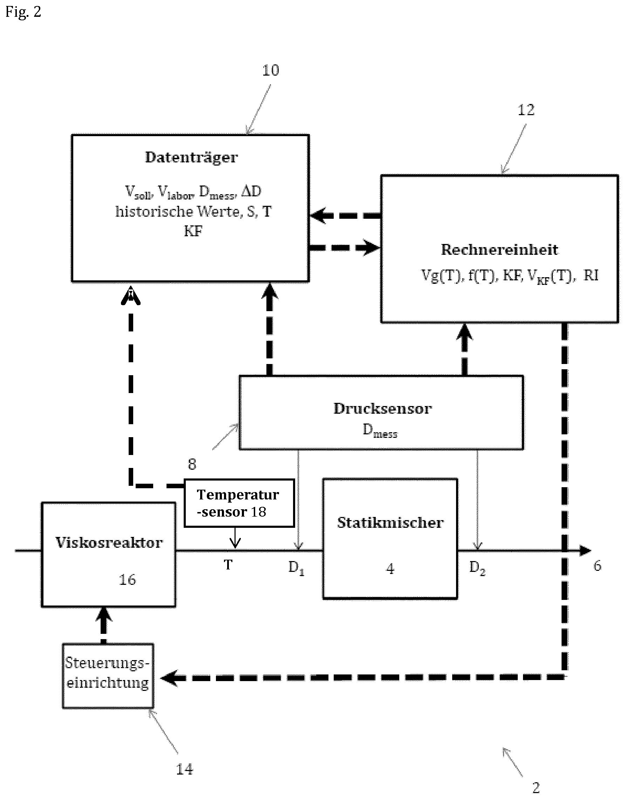

Die Fig. 2 zeigt eine Ausgestaltung eines Systems 2 zum Ausführen des Verfahrens gemäß der Fig. 1 in einer schematischen Darstellung. Das System 2 umfasst einen Statikmischer 4, der Teil einer Produktionsanlage 6 ist und eingerichtet ist zum Herstellen eines thermoplastischen Kunststoffes. Ferner umfasst das System 2 Mittel zum Erfassen eines Druckwerts, vorliegend in Form eines Drucksensors 8, ein Speichermedium, vorliegend in Form eines Datenträgers 10 und eine Rechnereinheit 12 auf.

Die jeweiligen Bauteile des Systems sind über Kommunikationsverbindungen verbunden, die in der Fig. 2 mithilfe breiter, gestrichelter Pfeile schematisch gezeigt sind.

Beim Herstellen eines thermoplastischen Kunststoffes wird der Kunststoff durch den Statikmischer 4 durchgeführt. Dabei kommt es zwischen dem Eingang des Statikmischers 4 und dem Ausgang des Statikmischers 4 zu einem Druckverlust.

Ein Drucksensor 8 ist dazu eingerichtet, zwei Drücke zu erfassen, zum Beispiel durch zwei Sensoren. In der Fig. 2 erfasst der Drucksensor 8 einen ersten Druck $D_1$ am Eingang des Statikmischers 4 und einen zweiten Druck $D_2$ am Ausgang des Statikmischers 4. Der Drucksensor 8 weist eine Prozessoreinheit (in Fig. 2 nicht dargestellt) auf, die die Differenz $D_{mess}=D_1-D_2$ berechnet.

Der Drucksensor 8 weist Kommunikationsmittel auf, die sowohl zur Kommunikationsverbindung mit der Rechnereinheit 12, als auch zur Kommunikationsverbindung mit dem Datenträger 10 eingerichtet sind. So werden einerseits die Werte für $D_{mess}$, die im Laufe sukzessiver Druckmessungen erhalten werden, in dem Datenträger 10 gespeichert, und andererseits die jeweiligen aktuellen Werte für $D_{mess}$ zu der Rechnereinheit 12 übermittelt.

Im Datenträger 10 sind Sollviskositätswerte $V_{soll}$, die jeweils einem für eine spezifische Temperatur gezielten Viskositätswert entsprechen, aus der Produktionsanlage 6 mit geeigneten Mitteln gemessene und übermittelte Temperaturen und Durchsatzwerte S (hier nicht explizit eingezeichnet) und im Labor direkt, jeweils bei einer spezifischen Temperatur gemessenen reale Viskositäten $V_{labor}$ gespeichert. Der Datenträger 10 ist über eine reziproke Kommunikationsverbindung mit der Rechnereinheit 12 verbunden, so dass Informationen sowohl vom Datenträger 10 zur Rechnereinheit 12, als auch von der Rechnereinheit 12 zum Datenträger 10 übermittelt werden können.

Die Rechnereinheit 12 verfügt über ein Speichermedium und Programmanweisungen, die auf dem Speichermedium gespeichert und ausführbar sind. Die Programmanweisungen sind hier in einem gemeinsamen Programm geschrieben und jeweils zum Ausführen einer Berechnung vorgesehen.

Auf Basis eines aus dem Drucksensor 8 übermittelten Druckwerts $D_{mess}$, einer ebenfalls aus dem Datenträger 10 übermittelten Temperatur $T_1$, und einem aus dem Datenträger 10 übermittelten Durchsatz S und eines aus dem Datenträger 10 übermittelten Sollviskositätswerts $V_{soll}$ führt die Rechnereinheit 12 durch eine erste Programmanweisung eine Berechnung, die einen geschätzten und temperaturabhängigen Wert $V_g(T_1)$ liefert. Die Rechnereinheit 12 berechnet zudem durch eine weitere Programmanweisung und auf Basis eines aus dem Datenträger 10 übermittelten Wert $V_{labor}$ eine wie oben beschriebene Differenz zwischen dem zuvor berechneten Wert $V_g(T_1)$ und dem Wert $V_{labor}$. Diese Differenz bildet einen historischen Wert, der zusammen mit weiteren historischen Werten im Datenspeicher 10 als Korrekturfaktor KF gespeichert wird.

Anhand einer Mehrzahl an historischen Werten und durch eine weitere Programmanweisung berechnet die Rechnereinheit 12 einen Korrekturfaktor $f(T_1)$. Anschließend berechnet die Rechnereinheit 12 durch eine weitere Programmanweisung und unter Berücksichtigung des aus dem Drucksensor 8 übermittelten Druckwerts $D_{mess}$ einen durch den Korrekturfaktor KF korrigierten Viskositätswert $V_{KF}(T_1)$. Auf Basis von $V_{KF}(T_1)$ und einerseits unter Berücksichtigung der Möglichkeiten, die die Steuereinrichtung 14 zum Einstellen des Viskosreaktors 16 bietet, und andererseits unter Berücksichtigung der Möglichkeiten, die zur Beeinflussung des Drucks möglich sind, bestimmt die Rechnereinheit 12 durch eine weitere Programmanweisung eine Regelungsinformation RI.

Die Regelungsinformation RI wird dann zu einer Steuer- und/oder Regeleinrichtung 14 übermittelt, die dazu eingerichtet ist, einen Viskosreaktor 16 zu steuern. Der Viskosreaktor ist in der Produktionsanlage 6 vor dem Statikmischer 4 angeordnet und dazu eingerichtet, das viskose Verhalten des Kunststoffes zu beeinflussen. Die Regeleinrichtung 14 stellt den Viskosreaktor 16 entsprechend der Regelungsinformation RI ein. Als Ergebnis wird das viskose Verhalten des Kunststoffes in Abhängigkeit der Regelungsinformation RI beeinflusst, so dass beim späteren Durchführen des Kunststoffes durch den Statikmischer 4, die Differenz zwischen dem Druck am Eingang des Statikmischers 4 und dem Druck am Ausgang des Statikmischers 4 geändert ist.

So bildet das System einen Regelkreis, der zum Verringern der Schwankungen in der Produktqualität beiträgt.

Die in dieser Spezifikation beschriebenen beispielhaften Ausführungsformen / Ausführungsbeispiele sollen sowohl einzeln als auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

Die in den Figuren dargestellten und beschriebenen Ausführungsbeispiele dienen lediglich der Erläuterung der Erfindung und sind für diese nicht beschränkend.

**Bezugszeichenliste**

2   System
4   Statikmischer
6   Produktionsanlage
8   Drucksensor
10   Datenträger
12   Rechnereinheit
14   Steuer- und/oder Regeleinrichtung
16   Viskosreaktor
18   Temperatursensor

**Patentansprüche**

1.  Verfahren zur Steuerung und/oder Regelung einer zur Herstellung von thermoplastischem Kunststoff eingerichteten Produktionsanlage, durchgeführt von einer oder mehreren Vorrichtungen, umfassend:

- Erfassen eines Druckwerts in der Produktionsanlage;
- Bestimmen eines geschätzten Werts, der für eine Viskosität indikativ ist, zumindest teilweise basierend auf dem erfassten Druckwert und zumindest teilweise basierend auf einer Temperaturabhängigkeit eines viskosen Verhaltens des thermoplastischen Kunststoffes und des Volumenstroms; und
- Bestimmen eines für das viskose Verhalten des thermoplastischen Kunststoffes indikativen Viskositätswerts zumindest teilweise in Abhängigkeit eines Korrekturfaktors, wobei der Korrekturfaktor für einen Anlagenzustand indikativ ist, und wobei der Anlagenzustand zumindest teilweise durch mindestens einen herrschenden Produktionsparameter bestimmt ist.

2.  Verfahren nach Anspruch 1, bei dem der Korrekturfaktor dem Ergebnis einer statistischen Berechnung entspricht, wobei die statistische Berechnung auf historischen Werten für das Verhältnis zwischen dem geschätzten Wert, der für eine Viskosität indikativ ist, und einer realen Viskosität basiert.

3.  Verfahren nach Anspruch 1 oder 2,
bei dem ein erster Druck an einer ersten Position erfasst wird,

- bei dem ein zweiter Druck an einer zweiten Position erfasst wird, und
- bei dem der Druckwert der Differenz zwischen dem ersten Druck und dem zweiten Druck entspricht.

4.  Verfahren nach einem der Ansprüche 1 bis 3,
bei dem der mindestens eine herrschende Produktionsparameter für einen oder mehreren der folgenden Kennwerte i) bis iii) indikativ ist:

i) Temperatur des Kunststoffes;
ii) Druck; und
iii) Volumenstrom durch die Produktionsanlage.

5.  Verfahren nach einem der Ansprüche 2 bis 4,
bei dem die historischen Werte indikativ für den Anlagenzustand und eine Art des thermoplastischen Kunststoffes sind.

6.  Verfahren nach einem der Ansprüche 1 bis 5
bei dem die historischen Werte das Ergebnis einer Reihenmessung sind.

7.  Verfahren nach einem der Ansprüche 1 bis 6, ferner umfassend:

- Vergleichen des bestimmten und für das viskose Verhalten des thermoplastischen Kunststoffes indikativen Viskositätswerts mit einem Sollviskositätswert;
- Bestimmen mindestens einer Regelungsinformation, die zumindest teilweise auf dem Ergebnis des Vergleichs basiert;
- Ausgeben oder Veranlassen des Ausgebens der bestimmten Regelungsinformation, wobei basierend auf der bestimmten Regelungsinformation eine Steuerung und/oder Regelung der Produktionsanlage durchführbar ist; und
- Steuern und/oder Regeln der Produktionsanlage zumindest teilweise in Abhängigkeit der Regelungsinformation.

8. Verfahren nach Anspruch 7,

- bei dem das Verfahren einen Regelkreis bildet und während der Herstellung eines thermoplastischen Kunststoffs kontinuierlich und/oder diskret in vorbestimmten Zeitintervallen abläuft.

9. Verfahren nach Anspruch 8, ferner umfassend:

- Produktwechsel des von der Produktionsanlage hergestellten thermoplastischen Kunststoffs von einer ersten Art des thermoplastischen Kunststoffes zu einer weiteren Art des thermoplastischen Kunststoffes, wobei der Regelkreis weiter läuft, wobei der Korrekturfaktor für das Bestimmen des für das viskose Verhalten des thermoplastischen Kunststoffes indikativen Viskositätswerts nach dem Produktwechsel auf historischen Werten basiert, die zumindest teilweise für die weitere Art des thermoplastischen Kunststoffes indikativ sind.

10. Vorrichtung eingerichtet zur Ausführung und/oder Steuerung des Verfahrens nach einem der Ansprüche 1 bis 9 oder umfassend jeweilige Mittel zur Ausführung und/oder Steuerung der Schritte des Verfahrens nach einem der Ansprüche 1 bis 9.

11. Vorrichtung nach Anspruch 10,
**dadurch gekennzeichnet,**
**dass** ein Statikmischer (4) und ein Viskosreaktor (16) vorgesehen sind.

12. System, umfassend eine oder mehrere Vorrichtungen, welche zusammen dazu ausgebildet und/oder eingerichtet sind, ein Verfahren nach einem der Ansprüche 1 bis 9 auszuführen,
**dadurch gekennzeichnet,**

- **dass** Erfassungsmitteln (8) zum Erfassen eines Druckwerts in der Produktionsanlage (6) vorgesehen sind,
- **dass** Bestimmungsmittel (12) zum Bestimmen eines geschätzten Werts, der für eine Viskosität indikativ ist, vorgesehen sind, wobei das Bestimmen zumindest teilweise auf dem erfassten Druckwert und zumindest teilweise auf einer Temperaturabhängigkeit eines viskosen Verhaltens des thermoplastischen Kunststoffs basiert, und
- **dass** Bestimmungsmittel (12) zum Bestimmen eines für das viskose Verhalten des thermoplastischen Kunststoffes indikativen Viskositätswerts vorgesehen sind, wobei das Bestimmen zumindest teilweise auf einem Korrekturfaktor basiert, der für einen Anlagenzustand indikativ ist, und wobei der Anlagenzustand zumindest teilweise durch mindestens einen herrschenden Produktionsparameter bestimmt ist.

13. System nach Anspruch 12,
**dadurch gekennzeichnet,**

- **dass** die mindestens eine Vorrichtung ein Statikmischer (4) ist,
- **dass** die Erfassungsmittel (8) dazu eingerichtet sind, einen ersten Druck an einer ersten, vor dem Statikmischer angeordneten Position und einen zweiten Druck an einer zweiten, nach dem Statikmischer (4) angeordneten Position zu erfassen, und
- **dass** der Druckwert der Differenz zwischen dem ersten Druck und dem zweiten Druck entspricht.

14. System nach Anspruch 12 oder 13,
**dadurch gekennzeichnet,**
**dass** Eingabemittel zur Eingabe historischer Werte und/oder Eingabe eines Sollviskositätswerts vorgesehen sind.

**15.** System nach einem der Ansprüche 12 bis 14,
**dadurch gekennzeichnet,**
**dass** Bestimmungsmittel (12) zum Bestimmen mindestens einer Regelungsinformation (RI) vorgesehen sind, wobei das Bestimmen auf dem Ergebnis eines Vergleichs zwischen dem bestimmten und für das viskose Verhalten des thermoplastischen Kunststoffes indikativen Viskositätswert mit einem Sollviskositätswert basiert, und
**dass** Ausgabemittel zum Ausgeben der mindestens einen bestimmten Regelungsinformation (RI) vorgesehen sind.

**16.** System nach Anspruch 15,
**dadurch gekennzeichnet,**
**dass** eine Regelungseinrichtung (14) vorgesehen ist, die zur Durchführung einer Steuerung und/oder Regelung der einen oder mehreren Vorrichtungen (4) eingerichtet ist, wobei die Steuerung und/oder Regelung zumindest teilweise auf der mindestens einen bestimmten Regelungsinformation (RI) basiert.

**17.** System nach einem der Ansprüche 12 bis 16,
**dadurch gekennzeichnet,**
**dass** das System einen Viskosreaktor (16) umfasst,

- **dass** der Viskosreaktor (16) dazu eingerichtet ist, das viskose Verhalten des thermoplastischen Kunststoffes zu beeinflussen, und
- **dass** die Regelungseinrichtung (14) dazu eingerichtet ist, den Viskosreaktor (16) zu steuern und/oder zu regeln.

Fig. 1

I — Erfassen eines Druckwerts $D_{mess}$

L — Ermitteln einer realen Viskosität $V_{labor}$ durch punktuellen Probenentnahme

II — Bestimmen eines Korrekurfaktors $f(T)$ und eines Volumenstroms $S$

III — Bestimmen eines geschätzten Viskositätswerts $V_g(T)$

IV — Bestimmen historischer Werte aus einem Vergleich zwischen $V_g(T)$ und $V_{labor}$

V — Bestimmen eines Korrekturfaktors $KF$ und eines Viskositätswerts $V_{KF}(T)$ in Abhängigkeit von $f(T)$ und $D_{mess}$ und Volumenstroms $S$

VI — Vergleich zwischen $V_{KF}(T)$ und $V_{soll}$

Sollviskositätswert $V_{soll}$

VII — Bestimmen einer Regelungsinformation RI in Abhängigkeit des Ergebnisses des Vergleichs

VIII — Beeinflussen beispielsweise des Drucks in der Vorrichtung in Abhängigkeit von RI

16

Fig. 2

Europäisches
Patentamt

European
Patent Office

Office européen
des brevets

# EUROPÄISCHER RECHERCHENBERICHT

**Nummer der Anmeldung**

EP 18 17 6226

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 5 412 060 A (WULFF CLAUS [DE] ET AL) 2. Mai 1995 (1995-05-02) * Zusammenfassung * * Spalte 6, Zeile 44 - Spalte 10, Zeile 15 * ----- | 1-17 | INV. G05B19/418 G01N11/00 |
| A | US 4 425 790 A (BICE WILLIAM L [US] ET AL) 17. Januar 1984 (1984-01-17) * Zusammenfassung * * Spalte 1, Zeile 27 - Spalte 1, Zeile 64 * * Spalte 3, Zeile 48 - Spalte 4, Zeile 51 * ----- | 1-17 | |
| A | CN 103 275 290 A (ARCHITECTURAL ENG RES INST THE GENERAL LOGISITIC DEPT PLA) 4. September 2013 (2013-09-04) * das ganze Dokument * ----- | 1-17 | |
| A | WO 2008/043603 A1 (SIEMENS AG [DE]; WEINZIERL KLAUS [DE]; KLAUS FRANZ [DE]; SCHMORS STEFA) 17. April 2008 (2008-04-17) * das ganze Dokument * ----- | 1-17 | |

**RECHERCHIERTE SACHGEBIETE (IPC)**

G05B
G01N
B01J

Der vorliegende Recherchenbericht wurde für alle Patentansprüche erstellt

| Recherchenort | Abschlußdatum der Recherche | Prüfer |
|---|---|---|
| Den Haag | 9. November 2018 | Abbing, Ralf |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**EP 3 579 069 A1**

**ANHANG ZUM EUROPÄISCHEN RECHERCHENBERICHT
ÜBER DIE EUROPÄISCHE PATENTANMELDUNG NR.**

EP 18 17 6226

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-11-2018

| Im Recherchenbericht angeführtes Patentdokument | Datum der Veröffentlichung | Mitglied(er) der Patentfamilie | Datum der Veröffentlichung |
|---|---|---|---|
| US 5412060 A | 02-05-1995 | KEINE | |
| US 4425790 A | 17-01-1984 | KEINE | |
| CN 103275290 A | 04-09-2013 | KEINE | |
| WO 2008043603 A1 | 17-04-2008 | AT 472760 T | 15-07-2010 |
| | | BR PI0719230 A2 | 29-04-2014 |
| | | CN 101535906 A | 16-09-2009 |
| | | DE 102007025447 A1 | 17-04-2008 |
| | | EP 2076824 A1 | 08-07-2009 |
| | | RU 2009117324 A | 20-11-2010 |
| | | US 2010100218 A1 | 22-04-2010 |
| | | WO 2008043603 A1 | 17-04-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4062524 A
- DE 2532355
- US 6394644 B
- EP 1617980 A
- EP 2255947 A

**In der Beschreibung aufgeführte Nicht-Patentliteratur**

- **SCHNELL.** Chemistry and Physics of Polycarbonats, Polymer Reviews. Interscience Publishers, 1964, vol. 9
- **D.C. PREVORSEK ; B.T. DEBONA ; Y. KERSTEN.** Corporate Research Center. Allied Chemical Corporation
- Synthesis of Poly(ester)carbonate Copolymers. Journal of BMS 09 1 257-Ausland Polymer Science, Polymer Chemistry. 1980, vol. 19, 75-90
- **D. FREITAG ; U. GRIGO ; P.R. MÜLLER ; N. NOUVERTNE ; BAYER AG.** Polycarbonates" in Encyclopedia of Polymere Science and Engineering. 1988, vol. 11, 648-718
- Polycarbonate. **DES. U. GRIGO ; K. KIRCHER ; P.R. MÜLLER.** Becker/Braun, Kunststoff-Handbuch, Band 3/1,Polycarbonate, Polyacetale, Polyester, Celluloseester. Carl Hanser Verlag, 1992, 117-299